# EUROPEAN PATENT APPLICATION

(11) **EP 4 468 772 A1**
(43) Date of publication of application: **27.11.2024**
(21) Application number: 22921043.0
(22) Date of filing: 18.01.2022
(51) Int. Cl.: H04W 24/02

(54) **COMMUNICATION METHOD AND COMMUNICATION DEVICE FOR WIRELESS LOCAL AREA NETWORK SENSING MEASUREMENT FEEDBACK**

(71) Applicant: Beijing Xiaomi Mobile Software Co., Ltd., Beijing 100085 (CN)
(72) Inventor: DONG, Xiandong, Beijing 100085 (CN)
(74) Representative: Gunzelmann, Rainer
(86) International application number: PCT/CN2022/072607
(87) International publication number: WO 2023/137594

(57) **Abstract**

The present disclosure provides a communication method and communication device for wireless local area network sensing measurement feedback. The communication method comprises: determining a sensing measurement establishment message frame, wherein the sensing measurement establishment message frame comprises first information associated with a time slot of the wireless local area network sensing measurement feedback, wherein the time slot represents a time interval for feeding back sensing measurement results; and sending the sensing measurement establishment message frame.

## Description

### TECHNICAL FIELD

The disclosure relates to a wireless communication field, in particular to communication methods for a wireless local area network sensing measurement feedback and communication devices.

### BACKGROUND

Wireless local area networks (WLAN) have the characteristics of flexibility, mobility and low cost. With the development of communication technology and the growth of user needs, research on the application of WLAN is gradually deepening. For example, WLAN sensing is currently being studied. Its main application scenarios include: location discovery in dense environments (home and corporate environments), proximity detection, and presence detection.

### SUMMARY

Aspects of the disclosure are to address at least the above-mentioned problems and/or disadvantages. Embodiments of the disclosure provide the following technical solutions.

According to an exemplary embodiment of the disclosure, a communication method for a wireless local area network (WLAN) sensing measurement feedback is provided. The method includes: determining a sensing measurement setup message frame, in which the sensing measurement setup message frame includes first information associated with a time slot for the WLAN sensing measurement feedback, and the time slot represents a time interval for feeding back a sensing measurement result; and sending the sensing measurement setup message frame.

According to an exemplary embodiment of the disclosure, another communication method for a WLAN sensing measurement feedback is provided. The method includes: receiving a sensing measurement setup message frame, in which the sensing measurement setup message frame includes first information associated with a time slot for the WLAN sensing measurement feedback, and the time slot represents a time interval for feeding back a sensing measurement result; and performing the WLAN sensing measurement feedback based on the sensing measurement setup message frame.

According to an exemplary embodiment of the disclosure, a communication device is provided. The device includes: a processing module, configured to determine a sensing measurement setup message frame, in which the sensing measurement setup message frame includes first information associated with a time slot for a WLAN sensing measurement feedback, and the time slot represents a time interval for feeding back a sensing measurement result; and a transceiver module, configured to send the sensing measurement setup message frame.

According to an exemplary embodiment of the disclosure, another communication device is provided. The device includes: a transceiver module, configured to receive a sensing measurement setup message frame, in which the sensing measurement setup message frame includes first information associated with a time slot for a WLAN sensing measurement feedback, and the time slot represents a time interval for feeding back a sensing measurement result; and a processing module, configured to perform the WLAN sensing measurement feedback based on the sensing measurement setup message frame.

According to an exemplary embodiment of the disclosure, an electronic device is provided. The electronic device includes: a memory, a processor and a computer program stored on the memory and executable by the processor. When the computer program is executed by the processor, the above methods are implemented.

According to an exemplary embodiment of the disclosure, a computer-readable storage medium having a computer program stored thereon is provided. When the computer program is executed by a processor, the above methods are implemented.

The technical solutions according to the exemplary embodiments of the disclosure refine the time slot for feeding back the WLAN sensing measurement result, which may better meet the needs of WLAN sensing.

### BRIEF DESCRIPTION OF THE DRAWINGS

The above and additional features of embodiments of the disclosure will become more apparent by describing embodiments of the disclosure in detail with reference to the accompanying drawings.
FIG. 1 is a schematic diagram illustrating an exemplary mode of a wireless local area network (WLAN) sensing.
FIG. 2 is a flowchart illustrating an exemplary WLAN sensing measurement process.
FIG. 3 is a flowchart illustrating a communication method according to an example embodiment.
FIG. 4 is a flowchart illustrating a process for determining a sensing measurement setup message frame according to an example embodiment.
FIG. 5 is a flowchart illustrating another communication method according to an example embodiment.
FIG. 6 is a block diagram illustrating a communication device according to an example embodiment.

### DETAILED DESCRIPTION

The following description with reference to the accompanying drawings is provided to fully understand the various embodiments of the disclosure as defined by the appended claims and their equivalents. The various embodiments of the disclosure include various specific details, but such specific details are considered to be exemplary only. In addition, descriptions of well-known techniques, functions and constructions may be omitted for the sake of clarity and brevity.

Terms and words used in the disclosure are not limited to written meanings, but are used by inventors to enable a clear and consistent understanding of the disclosure. Therefore, for those skilled in the art, the description of various embodiments of the disclosure is provided only for the purpose of illustration, but not for the purpose of limitation.

It is understandable that "a", "an", "said", and "the" in singular forms used herein may also include plural forms, unless clearly indicated in the context otherwise. It should be further understood that the word "include" used in the disclosure refers to the existence of described features, integers, steps, operations, elements, and/or assemblies, but does not exclude the existence or addition of one or more other features, integers, steps, operations, elements, assemblies, and/or groups thereof.

It is understandable that although the terms "first" and "second" and the like may be used herein to describe various elements, these elements should not be limited by these terms. These terms are only used to distinguish one element from another. Therefore, a first element discussed below may be referred to as a second element without departing from the teaching of embodiments.

It is understandable that when an element is referred to as being "connected" or "coupled" to another element, it may be directly connected or coupled to other elements, or intervening elements may also exist. In addition, as used herein, "connected" or "coupled" may include wireless connection or wireless coupling. The term "and/or" or the expression "at least one of... " used herein includes any and all combinations of one or more related listed items.

Unless otherwise defined, all terms used herein, including technical terms and scientific terms, have the same meaning as generally understood by those skilled in the art to which this disclosure belongs.

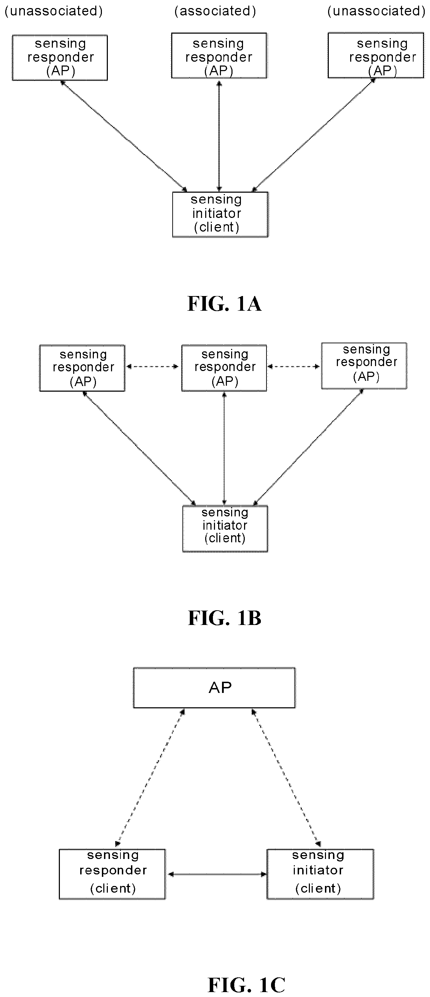

FIG. 1 is a schematic diagram illustrating an exemplary mode of a wireless local area network (WLAN) sensing.

The process of the WLAN sensing may be that an initiator initiates the WLAN sensing (for example, initiates a WLAN sensing session), and there may be multiple responders for responding to it. The specific possible implementation may be illustrated in FIGS. 1A to FIGS. 1C.

As illustrated in FIG. 1A, when the WLAN sensing initiator (e.g., a client) initiates the WLAN sensing, a plurality of associated or non-associated WLAN sensing responders (e.g., three access points (APs)) may respond thereto. The term "associated" may refer to that an associated connection for communication is established between the initiator and the responders, and the term "non-associated" may refer to that there is no associated connection for communication established between the initiator and the responders.

As an example, the client may include, but is not limited to: a cellular phone, a smart phone, a wearable device, a computer, a personal digital assistant (PDA), a Personal Communication System (PCS) device, a Personal Information Manager (PIM), a Personal Navigation Device (PND), a global positioning system, a multimedia device, an Internet of Thing (IoT) device, or others.

The AP may be a wireless switch used for a wireless network or an access device for a wireless network. The AP may include software applications and/or circuits to enable other types of nodes in the wireless network to communicate with the outside of the wireless network as well as the inside through the AP. As an example, the AP may be a terminal device or network device equipped with a Wireless Fidelity (Wi-Fi) chip.

FIG. 1B is similar to FIG. 1A. In FIG. 1B, the responders (APs) may communicate with each other.

In FIG. 1C, the WLAN sensing initiator and the WLAN sensing responder may both be clients, and the two may communicate by connecting to the same AP.

In FIG. 1A, FIG. 1B and FIG. 1C, the client acts as the initiator and the AP acts as the responder, which is not limited in the disclosure. For example, the AP may act as the initiator and the client may act as the responder. In embodiments of the disclosure, the client may be a non-AP station (or called STA for short). The number of initiators and the number of responders are not limited to those illustrated in FIG. 1A, FIG. 1B and FIG. 1C.

As an illustrative embodiment, the WLAN sensing process includes: a WLAN sensing session setup, a WLAN sensing measurement setup, a WLAN sensing measurement, a WLAN sensing measurement feedback, etc. In the WLAN sensing session setup, operation parameters associated with a sensing session may be determined and exchanged between devices. One WLAN sensing session setup may include a plurality of WLAN sensing measurement setups. In one WLAN sensing measurement setup, operation parameters in the sensing measurement may be defined and one or more sensing measurement exchanges may be included. In the WLAN sensing measurement, one or more WLAN sensing measurement exchanges may be executed in order to obtain a WLAN sensing measurement result. In the WLAN sensing measurement feedback, the WLAN sensing measurement result may be fed back.

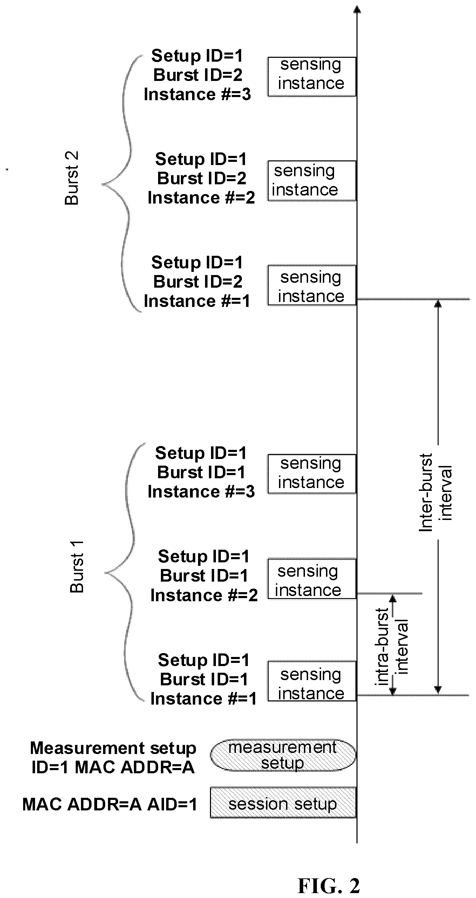

The WLAN sensing may be applied under the spectrum of 60GHz, and the process is illustrated in FIG. 2.

FIG. 2 illustrates one WLAN sensing session setup and one WLAN sensing measurement setup under the WLAN sensing session setup, which is not limited in the disclosure. The WLAN sensing process may include more WLAN sensing session setups, and each of the WLAN sensing session setups may include more WLAN sensing measurement setups. In the WLAN sensing session setup, a Media Access Control (MAC) Address (ADDR) of the initiator and an identifier (ID) of the responder may be identified. In the WLAN sensing measurement setup, a measurement setup ID and an MAC ADDR of the initiator may be identified.

Each WLAN sensing measurement setup may include one or more bursts, and each burst may include one or more WLAN sensing measurement exchanges (i.e., sensing instances in FIG. 2). The burst represents a specific time interval, and one or more WLAN sensing measurement exchanges may be performed within one burst. FIG. 2 illustrates two bursts (Burst 1 and Burst 2), and each burst includes 3 WLAN sensing measurement exchanges (i.e., sensing instances), which is merely illustrative and is not limited in the disclosure. The number of bursts in each WLAN sensing measurement setup and the number of sensing instances in each burst may be changed.

As illustrated in FIG. 2, each WLAN sensing measurement exchange has a respective ID (i.e., Instance #) and may correspond to a corresponding measurement setup ID (i.e., the Setup ID) and a corresponding Burst ID. The time interval between adjacent WLAN sensing measurement exchanges within a burst may be referred to as an intra-burst interval, and the time interval between adjacent bursts may be referred to as an inter-burst interval.

The WLAN sensing measurement feedback may be executed by sending a sensing measurement report frame. The sending of the sensing measurement report frame may be initiated by an MAC sublayer management entity (MLME) primitive. The WLAN sensing measurement feedback may adopt an immediate reporting type or a delayed reporting type. In the following, the immediate reporting may also be referred to as an immediate feedback, and the delayed reporting may also be referred to as a delayed feedback. In the immediate reporting type, a sensing measurement result may be fed back immediately whenever a sensing measurement exchange is performed. In the delayed reporting type, multiple sensing measurement results may be fed back after a plurality of sensing measurement exchanges have been performed. For example, for the delayed reporting type, the sensing measurement results of one or more WLAN sensing measurement setups (e.g., multiple WLAN sensing measurement exchanges) of the sensing responder may be included in a single sensing measurement report frame. The sensing initiator may optionally support obtaining multiple sensing measurement results from a single sensing measurement report frame sent by the sensing responder.

The above description of the WLAN sensing measurement feedback (i.e., the description of the immediate feedback and the delayed feedback) may be applied to directional multi-Giga (DMG)/ enhanced DMG (EDMG). However, in the current research, there is a lack of a well-developed feedback mechanism for the time slot used for the WLAN sensing measurement feedback.

Therefore, communication methods for the WLAN sensing measurement feedback and communication devices are provided according to embodiments of the disclosure.

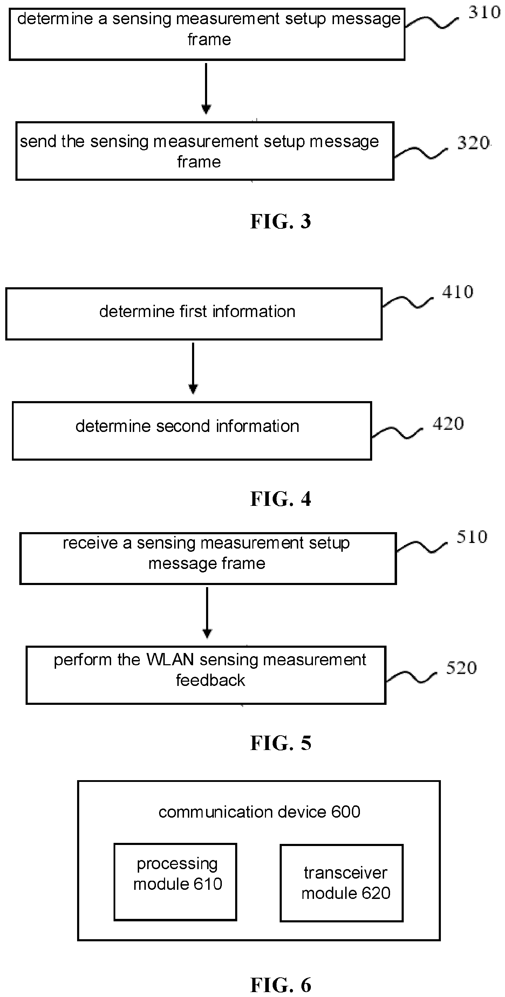

FIG. 3 is a flowchart illustrating a communication method according to an example embodiment. The communication method illustrated in FIG. 3 may be applied to a WLAN sensing initiator. For example, the WLAN sensing initiator may be an AP.

As illustrated in FIG. 3, at step 310, a sensing measurement setup message frame is determined. The sensing measurement setup message frame may be a frame used for establishing a WLAN sensing measurement (i.e., the measurement setup in FIG. 2) and may define a variety of information used for the WLAN sensing measurement and feedback. In embodiments of the disclosure, there may be various ways of determining the sensing measurement setup message frame. For example, the sensing measurement setup message frame may be generated or configured based on at least one of the following: channel state, network condition, load condition, hardware capability of device, service type, or specification of relevant protocol, which is not limited in embodiments of the disclosure.

According to an embodiment of the disclosure, the sensing measurement setup message frame may include first information associated with a time slot for the WLAN sensing measurement feedback. The time slot may represent a time interval for feeding back a sensing measurement result. That is, the relevant information of the time slot for the WLAN sensing measurement feedback may be defined in the WLAN sensing measurement setup (which may also be referred to as a "sensing measurement setup operation").

The time slot for the WLAN sensing measurement feedback may have different time intervals. The contents included in the first information in the sensing measurement setup message frame may vary depending on the time interval of the time slot. The first information may be determined in the sensing measurement setup message frame to indicate the time slot for feeding back the sensing measurement result, which will be described in detail later with reference to FIG. 4.

According to another embodiment of the disclosure, the sensing measurement setup message frame may also include second information indicating a WLAN sensing measurement feedback type. The WLAN sensing measurement feedback type includes an immediate feedback or a delayed feedback. The first information in the sensing measurement setup message frame may vary depending on the feedback type indicated by the second information, which will be described in detail later with reference to FIG. 4.

As illustrated in FIG. 3, at step 320, the sensing measurement setup message frame is sent. The initiator sends the sensing measurement setup message frame containing the information associated with the time slot for the WLAN sensing measurement feedback to the responder, and then receives a sensing measurement result reported based on a feedback time slot by the responder.

According to an embodiment of the disclosure, FIG. 4 is a flowchart illustrating a process for determining a sensing measurement setup message frame according to an example embodiment.

As illustrated in FIG. 4, the method of determining a sensing measurement setup message frame includes: determining first information (step 410) and determining second information (step 420). It is understandable that although the steps 410 and 420 are executed separately and sequentially in FIG. 4, the sequence is not limited in the disclosure. For example, the steps 410 and 420 may be executed simultaneously, or the steps 410 and 420 may executed in different orders, or the step 420 may be omitted. Or, determining the sensing measurement setup message frame may also include a step for determining other additional information.

At step 410, first information may be determined in combination with the time slot for the WLAN sensing measurement feedback. That is, the contents included in the first information in the sensing measurement setup message frame are determined. According to embodiments of the disclosure, the first information includes one of:
information indicating to provide a feedback for each measurement exchange;
information indicating to provide a feedback for every specific number of sensing measurement exchange;
information indicating to provide a feedback for every specific number of bursts; or
information indicating to provide a feedback for every specific number of sensing measurement setup operations.

For example, the first information may be carried, in a form of information element (which includes, but is not limited to, information elements for measurement feedback), in the sensing measurement setup message frame. In order to indicate the time slot for the WLAN sensing measurement feedback, the determined first information may include an "Instance interval of intra-burst" field. The determined first information may optionally include a "Number of instances" field and/or an "Interval between instances for delayed feedback" field. The determined first information may optionally include a "Number of bursts" field and/or an "Interval between bursts for delayed feedback" field. The determined first information may optionally include an "Interval of inter-burst" field and/or a "Duration of a burst" field. The determined first information may optionally include a "Number of measurement setups" field and/or an "Interval between measurement setups for delayed feedback" field. The determined first information may optionally include an "interval between adjacent measurement setup" field and/or a "Duration of a measurement setup" field. However, the above is only an example and does not limit the disclosure. For example, in the case where the first information is in a form of information element, in addition to these fields described above, the first information in the form of information element may include various other information, such as, element ID, extension ID, length, etc.

At step 420, a WLAN sensing measurement feedback type (i.e., the second information) is determined. That is, the contents of the second information in the sensing measurement setup message frame are determined.

In an embodiment of the disclosure, one bit in the sensing measurement setup message frame may be used to explicitly indicate the immediate feedback or the delayed feedback. For example, if the bit is "0", it indicates the immediate feedback, in which case the first information may not contain any inter-burst information, such as the Interval of inter-burst. If the bit is "1", it indicates the delayed feedback, in which case the first information may not contain any inter-exchange information, e.g., the Instance interval of intra-burst.

The first information may contain different information depending on the different WLAN sensing measurement feedback types (i.e., the second information). If the second information identifies the immediate feedback, the first information may include information indicating to provide a feedback for each measurement exchange (see Table 1 below). For example, if the second information identifies the delayed feedback, the first information may include one of:
the information indicating to provide a feedback for every specific number of sensing measurement exchange (see Table 2 below);
the information indicating to provide a feedback for every specific number of bursts (see Table 3 and Table 4 below); or
the information indicating to provide a feedback for every specific number of sensing measurement setup operations (see Table 5 and Table 6 below).

In another embodiment of the disclosure, the second information may be identified in an implicit manner, which means that the step 420 may be omitted, or different fields contained in the first information may be directly used to implicitly indicate the immediate feedback or the delayed feedback instead of using a specific bit in the sensing measurement setup message frame to indicate the WLAN sensing measurement feedback types. For example, the first information as illustrated in Table 1 below may correspond to the immediate feedback, and the second information as illustrated in Tables 2 to 6 below may correspond to the delayed feedback.

The communication methods described with reference to FIGS. 3 and 4 refines the time slot for feeding back the measurement result in the DMG/EDMG application scenario, which may better meet the needs of the WLAN sensing.

In an embodiment of the disclosure, a method for determining a time slot for the WLAN sensing measurement feedback is provided. In the method, information indicating to provide a feedback for each measurement exchange is determined during the sensing measurement setup process. This information may be referred to hereinafter as first information for ease of description. The method may be a method that defines a time slot for feeding back the measurement result in the DMG/EDMG application scenario. In this case, the time slot for the WLAN sensing measurement feedback may refer to a time interval between adjacent measurement exchange within each burst. For example, as shown in Table 1, the determined first information may include an "Instance interval of intra-burst" field to represent that a feedback is provided for each measurement exchange.

**Table 1**

| |
|---|
| Instance interval of intra-burst |

In Table 1, the "Instance interval of intra-burst" field may be used to indicate that the measurement result is fed back (or reported) whenever a WLAN sensing measurement exchange is executed. That is, Table 1 corresponds to the immediate feedback.

In another embodiment of the disclosure, a method of determining a time slot for the WLAN sensing measurement feedback is provided. In the method, the information indicating to provide a feedback for every specific number of sensing measurement exchange is determined during the sensing measurement setup process. For ease of description, this information may be referred to hereinafter as first information. In this case, the time slot for the WLAN sensing measurement feedback may refer to a time interval of a specific number of sensing measurement exchange whose sensing measurement results need to be fed back. For example, when a specific number of sensing measurement exchange refers to n sensing measurement exchanges (n being an integer greater than or equal to 2), the time slot for the WLAN sensing measurement feedback may be a time interval of the n sensing measurement exchange, for example, a time interval between the first sensing measurement exchange and the (n+1)th sensing measurement exchange, or a time interval between the (n+1)th sensing measurement exchange and the (2n+1)th sensing measurement exchange, etc.

For example, as shown in Table 2, the determined first information may optionally include a "Number of instances" field and/or an "Interval between instances for delayed feedback" field, to indicate the time slot for the WLAN sensing measurement feedback.

**Table 2**

| | |
|---|---|
| Number of instances | Interval between instances for delayed feedback |

In Table 2, the "Number of instances" field identifies how many sensing measurement exchange are included in an interval at which the feedback is provided. The "Interval between instances for delayed feedback" field identifies a time interval of a specific number of sensing measurement exchange whose sensing measurement results need to be fed back. For example, when the feedback is provided every 2 sensing measurement exchange, the "Number of instances" in Table 2 may be identified as 2, or the "Interval between instances for delayed feedback" may be identified as a time interval of every 2 sensing measurement exchanges.

It is understandable that the first information may include only one of the two fields in Table 2, or may include both fields, and may also include other fields. In addition, the specific number of sensing measurement exchange may all be included in the same burst or may be included in different bursts, which may be determined based on a duration of each measurement setup, a duration of each burst, and the number of the WLAN sensing measurement exchange (i.e., the sensing instances) in each burst.

In another embodiment of the disclosure, a method of determining a time slot for the WLAN sensing measurement feedback is provided. In the method, the information indicating to provide a feedback for every specific number of bursts is determined during the sensing measurement setup process. For ease of description, this information may be referred to hereinafter as first information. In this case, the time slot for the WLAN sensing measurement feedback may be a time interval of a specific number of bursts whose sensing measurement results need to be fed back. For example, if the specific number of bursts refers to m bursts (m being an integer greater than or equal to 1), the time slot for the WLAN sensing measurement feedback may be a time interval of m bursts, for example, a time interval between the first burst and the (m+1)th burst or a time interval between the (m+1)th burst and the (2m+1)th burst, etc.

For example, as shown in Table 3, the determined first information may optionally include a "Number of bursts" field and/or an "Interval between bursts for delayed feedback" field, to indicate the time slot for the WLAN sensing measurement feedback.

**Table 3**

| | |
|---|---|
| Number of bursts | Interval between bursts for delayed feedback |

In Table 3, the "Number of bursts" field may indicate how many bursts are included in an interval at which feedback is performed. The "Interval between bursts for delayed feedback" field may indicate a time interval of a specific number of bursts whose sensing measurement results need to be fed back. For example, when feedback is provided every 2 bursts, the "Number of bursts" field in Table 3 may be identified by 2, or the "Interval between bursts for delayed feedback" field may be identified as a time interval of every 2 bursts.

In another embodiment of the disclosure, a method of determining a time slot for the WLAN sensing measurement feedback is provided. In the method, the information indicating to provide a feedback every one burst is determined during the sensing measurement setup process. For ease of description, this information may be referred to hereinafter as first information. That is, when the "Number of bursts" field in Table 3 above is identified as 1 or is omitted, the feedback is provided after each burst, in which case the determined first information may include information as shown in Table 4 below.

**Table 4**

| | |
|---|---|
| Interval of inter-burst | Duration of a burst |

In Table 4, the "Interval of inter-burst" field and/or the "Duration of a burst" field is/are used to indicate the time slot for the WLAN sensing measurement feedback, i.e., the feedback is provided after each burst. However, Table 4 is a non-limiting embodiment. In Table 4, a "Number of bursts" field (which is identified as 1) and an "Instance number of a burst" field may also be included.

In another embodiment of the disclosure, a method of determining a time slot for the WLAN sensing measurement feedback is provided. In the method, the information indicating to provide a feedback for every specific number of sensing measurement setup operations is determined during the sensing measurement setup process. For ease of description, this information may be referred to hereinafter as first information. In this case, the time slot for the WLAN sensing measurement feedback may refer to a time interval of a specific number of sensing measurement setup operations whose sensing measurement results need to be fed back. For example, when the specific number of sensing measurement setup operations refers to t sensing measurement setup operations (t is an integer greater than or equal to 1), the time interval of the WLAN sensing measurement feedback may refer to a time interval of the t sensing measurement setup operations, e.g., a time interval between the first sensing measurement setup operation and the (t+1)th sensing measurement setup operation, or a time interval between the (t+1)th sensing measurement setup operation and the (2t+1)th sensing measurement setup operation, etc.

For example, as shown in Table 5, the determined first information may optionally include a "Number of measurement setups" field and/or an "Interval between measurement setups for delayed feedback" field, to indicate the time slot of the WLAN sensing measurement feedback.

**Table 5**

| | |
|---|---|
| Number of measurement setups | Interval between measurement setups for delayed feedback |

In Table 5, the "Number of measurement setups" field indicates how many sensing measurement setups are included in an interval at which feedback is provided. The "Interval between measurement setups for delayed feedback" field may indicate a time interval of a specific number of sensing measurement setup operations whose sensing measurement results need to be fed back. For example, when feedback is provided every 2 measurement setups, the "Number of measurement setups" field in Table 5 may be identified as 2, or the "Interval between measurement setups for delayed feedback" field may be identified as the time interval of every 2 measurement setups.

In another embodiment of the disclosure, a method of determining a time slot for the WLAN sensing measurement feedback is provided. In the method, the information indicating to provide a feedback for every measurement setup is determined during the sensing measurement setup process. For ease of description, this information may be referred to hereinafter as first information. That is, when the "Number of measurement setups" field in Table 5 above is identified as 1 or is omitted, the feedback is provided after each sensing measurement setup operation, in which case the determined first information may include information as shown in Table 6 below.

**Table 6**

| | |
|---|---|
| Interval between adjacent measurement setup | Duration of a measurement setup |

In Table 6, the "Interval between adjacent measurement setup" field and/or the "Duration of a measurement setup" field may be used to indicate the time slot for the WLAN sensing measurement feedback, i.e., the feedback is provided after each measurement setup. However, Table 6 is only a non-limiting embodiment. For example, in Table 6, a "Number of measurement setups" field (which is identified as 1) may be included. In some examples, an "Instance number of a measurement setup" field or a "Burst number of a measurement setup" field may be included.

Furthermore, it is understandable that the above examples of the first information described with reference to Tables 1-6 are illustrative only and the disclosure is not limited thereto. For example, the first information may also include time synchronization function (TSF) information. In detail, if an initial association between the initiator (e.g., AP) and the responder (e.g., STA) is not established, the first information may include the TSF information (e.g., the TSF information is included in Tables 1-6) for time synchronization between the initiator and the responder, or the TSF information included in the first information domain is separately identified in different fields of the sensing measurement setup message frame.

Although Tables 1-6 are shown separately in above embodiments, the disclosure is not limited thereto. For example, the first information may include all the information shown in Tables 1-6 as well as the additional information described with reference to Tables 1 -6, and the first information may include corresponding fields of various different time slots determined as needed, and other fields that do not need to be included may be null or may be reserved bits.

FIG. 5 is a flowchart illustrating another communication method according to an example embodiment. The communication method illustrated in FIG. 5 may be performed by a WLAN sensing responder, such as, an STA.

As illustrated in FIG. 5, at step 510, a sensing measurement setup message frame is received. According to embodiments of the disclosure, the sensing measurement setup message frame may include first information associated with a time slot for a WLAN sensing measurement feedback, in which the time slot may indicate a time interval for feeding back the sensing measurement result.

According to embodiments of the disclosure, depending on different time intervals indicated by the time slot, the first information may include corresponding information.

According to embodiments of the disclosure, the first information includes one of the following:
information indicating to provide a feedback for each measurement exchange;
information indicating to provide a feedback for every specific number of sensing measurement exchange;
information indicating to provide a feedback for every specific number of bursts; or
information indicating to provide a feedback for every specific number of sensing measurement setup operations.

Embodiments described above in combination with Tables 1-6 may be applied herein, and repeated descriptions are omitted herein for brevity.

According to embodiments of the disclosure, the first information may also include TSF information.

According to embodiments of the disclosure, the sensing measurement setup message frame may further include second information indicating a WLAN sensing measurement feedback type. The feedback type may include an immediate feedback or a delayed feedback.

According to embodiments of the disclosure, in the case where the second information indicates the immediate feedback, the first information may include the information indicating to provide a feedback for each measurement exchange.

According to embodiments of the disclosure, in the case where the second information indicates the delayed feedback, the first information includes one of the following:
the information indicating to provide a feedback for every specific number of sensing measurement exchange;
the information indicating to provide a feedback for every specific number of bursts; or
the information indicating to provide a feedback for every specific number of sensing measurement setup operations.

At step 520, the WLAN sensing measurement feedback is performed based on the sensing measurement setup message frame. For example, the responder may determine a feedback time slot and a feedback type based on the first information in the measurement setup message frame (or, based on the first information and the second information), and send a WLAN sensing measurement result (which may be, but is not limited to, channel state information (CSI)) to the initiator based on the feedback time slot.

FIG. 6 is a block diagram illustrating a communication device 600 according to an example embodiment. The communication device 600 of FIG. 6 may include a processing module 610 and a transceiver module 620. In an embodiment of the disclosure, the communication device 600 illustrated in FIG. 6 may be applied to an initiator (e.g., an AP). In another embodiment of the disclosure, the communication device 600 illustrated in FIG. 6 may be applied to a responder (e.g., an STA).

In the case where the communication device 600 illustrated in FIG. 6 is applied to an initiator (e.g., an AP), the processing module 610 is configured to: determine a sensing measurement setup message frame, in which the sensing measurement setup message frame includes first information associated with a time slot for a WLAN sensing measurement feedback, and the time slot represents a time interval for feeding back a sensing measurement result. The transceiver module 620 is configured to send the sensing measurement setup message frame. That is, the communication device 600 illustrated in FIG. 6 may perform the communication methods described with reference to FIGS. 3 and 4, and embodiments described with reference to Tables 1-6 may be applied thereto, and repetitive descriptions are omitted herein to avoid redundancy.

In the case where the communication device 600 illustrated in FIG. 6 is applied to a responder (e.g., a STA), the transceiver module 620 is configured to receive a sensing measurement setup message frame, in which the sensing measurement setup message frame includes first information associated with a time slot for a WLAN sensing measurement feedback, and the time slot represents a time interval for feeding back a sensing measurement result. The processing module 610 is configured to perform the WLAN sensing measurement feedback based on the sensing measurement setup message frame. That is, the communication device 600 illustrated in FIG. 6 may perform the communication method described with reference to FIG. 5, and embodiments described with reference to Tables 1-6 may be applied thereto, and repetitive descriptions are omitted herein to avoid redundancy.

It is understandable that the communication device 600 illustrated in FIG. 6 is merely exemplary, and embodiments of the disclosure are not limited thereto. For example, the communication device 600 may include other modules, such as a memory module. Furthermore, modules in the communication device 600 may be combined into more complex modules or may be divided into more separate modules.

With the communication methods and the communication devices according to embodiments of the disclosure, the time slot for feeding back the WLAN sensing measurement result is refined, which may better meet the needs of the WLAN sensing.

Based on the same principles as the methods according to embodiments of the disclosure, embodiments of the disclosure also provide an electronic device including a processor and a memory. The memory has machine-readable instructions (which may also be referred to as "computer program") stored thereon, and the processor is configured to execute the machine-readable instructions, to implement the methods described with reference to FIGS. 3 to 5.

Embodiments of the disclosure also provide a computer-readable storage medium having a computer program stored thereon. When the computer program is executed by a processor, the method described with reference to FIGS. 3 to 5 is implemented.

In exemplary embodiments, the processor may be a logic box, a module, or a circuit, for implementing or executing various embodiments described in the disclosure, for example, a Central Processing Unit (CPU), a general processor, a Digital Signal Processor (DSP), an Application Specific Integrated Circuit (ASIC), a Field Programmable Gate Array (FPGA) or other programmable logic devices, a transistor logic device, a hardware component, or any combination thereof. The processor may also be a combination used to implement a computing function, for example, a combination including one or more microprocessors, and a combination including DSPs and microprocessors.

In exemplary embodiments, the memory may be, for example, a Read Only Memory (ROM), a Random Access Memory (RAM), an Electrically Erasable Programmable Read Only Memory (EEPROM), a Compact Disc Read Only Memory (CD-ROM) or other optical disc memories, optical disk memories (including compact disc, laser disc, CD-ROM, digital general disc, and Blu-ray disc), disk storage mediums or other magnetic storage devices, or any other medium that may be used to carry or store program codes in the form of instructions or data structures and may be accessed by a computer, which is not limited herein.

It is understandable that although steps in the flowchart of the accompanying drawings are shown sequentially as indicated by the arrows, the steps are not necessarily performed sequentially in the order indicated by the arrows. Unless explicitly stated otherwise in the disclosure, there is no strict sequential limitation on the execution of these steps, which may be performed in any other order. In addition, at least some of the steps in the flowchart of the accompanying drawings may include a plurality of sub-steps or a plurality of phases, which are not necessarily executed at the same time, but may be executed at different times. The execution order is not necessarily sequential, and the steps may be performed alternately or alternatively with other steps or at least part of sub-steps or phases of other steps.

Although the disclosure has been shown and described with reference to embodiments of the disclosure, it will be understood by those skilled in the art that various changes in form and detail may be made without departing from the scope of the disclosure. Accordingly, the scope of the disclosure should not be limited by embodiments, but should be defined by the appended claims and their equivalents.

## Claims

1. A communication method for a wireless local area network (WLAN) sensing measurement feedback, comprising:
determining a sensing measurement setup message frame, wherein the sensing measurement setup message frame comprises first information associated with a time slot for the WLAN sensing measurement feedback, and the time slot represents a time interval for feeding back a sensing measurement result; and
sending the sensing measurement setup message frame.

2. The method of claim 1, wherein the first information comprises corresponding information according to the time slot which represents different time intervals.

3. The method of claim 2, wherein the first information comprises one of:
information indicating to provide a feedback for each measurement exchange;
information indicating to provide a feedback for every specific number of sensing measurement exchange;
information indicating to provide a feedback for every specific number of bursts; or
information indicating to provide a feedback for every specific number of sensing measurement setup operations.

4. The method of claim 3, wherein the first information further comprises time synchronization function information.

5. The method of any one of claims 2- to 4, wherein the sensing measurement setup message frame further comprises second information indicating a WLAN sensing measurement feedback type, and the feedback type comprises an immediate feedback or a delayed feedback.

6. The method of claim 5, wherein in response to the second information indicating the immediate feedback, the first information comprises the information indicating to provide a feedback for each measurement exchange.

7. The method of claim 5, wherein in response to the second information indicating the delayed feedback, the first information comprises one of:
the information indicating to provide a feedback for every specific number of sensing measurement exchange;
the information indicating to provide a feedback for every specific number of bursts; or
the information indicating to provide a feedback for every specific number of sensing measurement setup operations.

8. A communication method for a wireless local area network (WLAN) sensing measurement feedback, comprising:
receiving a sensing measurement setup message frame, wherein the sensing measurement setup message frame comprises first information associated with a time slot for the WLAN sensing measurement feedback, and the time slot represents a time interval for feeding back a sensing measurement result; and
performing the WLAN sensing measurement feedback based on the sensing measurement setup message frame.

9. The method of claim 8, wherein the first information comprises corresponding information according to the time slot which represents different time intervals.

10. The method of claim 9, wherein the first information comprises one of:
information indicating to provide a feedback for each measurement exchange;
information indicating to provide a feedback for every specific number of sensing measurement exchange;
information indicating to provide a feedback for every specific number of bursts; or
information indicating to provide a feedback for every specific number of sensing measurement setup operations.

11. The method of claim 10, wherein the first information further comprises time synchronization function information.

12. The method of any one of claims 9 to 11, wherein the sensing measurement setup message frame further comprises second information indicating a WLAN sensing measurement feedback type, and the feedback type comprises an immediate feedback or a delayed feedback.

13. The method of claim 12, wherein in response to the second information indicating the immediate feedback, the first information comprises the information indicating to provide a feedback for each measurement exchange.

14. The method of claim 12, wherein in response to the second information indicating the delayed feedback, the first information comprises one of:
the information indicating to provide a feedback for every specific number of sensing measurement exchange;
the information indicating to provide a feedback for every specific number of bursts; or
the information indicating to provide a feedback for every specific number of sensing measurement setup operations.

15. A communication device, comprising:
a processing module, configured to determine a sensing measurement setup message frame, wherein the sensing measurement setup message frame comprises first information associated with a time slot for a wireless local area network (WLAN) sensing measurement feedback, and the time slot represents a time interval for feeding back a sensing measurement result; and
a transceiver module, configured to send the sensing measurement setup message frame.

16. A communication device, comprising:
a transceiver module, configured to receive a sensing measurement setup message frame, wherein the sensing measurement setup message frame comprises first information associated with a time slot for a wireless local area network (WLAN) sensing measurement feedback, and the time slot represents a time interval for feeding back a sensing measurement result; and
a processing module, configured to perform the WLAN sensing measurement feedback based on the sensing measurement setup message frame.

17. An electronic device comprising a memory, a processor and a computer program stored on the memory and executable by the processor, wherein when the computer program is executed by the processor, the method of any one of claims 1 to 7 or the method of any one of claims 8 to14 is performed.

18. A computer-readable storage medium, having a computer program stored thereon, wherein when the computer program is executed by a processor, the method of any one of claims 1 to 7 or the method of any one of claims 8 to 14 is performed.
